# EUROPEAN PATENT SPECIFICATION

(11) **EP 4 594 097 B1**
(45) Date of publication and mention of the grant of the patent: **09.09.2026**
(21) Application number: 23782236.6
(22) Date of filing: 28.09.2023
(51) Int. Cl.: B32B 5/02, B32B 7/12, B32B 27/08, B32B 27/12, B32B 27/20, B32B 27/22, B32B 27/34, B32B 27/36, B32B 27/40

(54) **BIODEGRADABLE MULTILAYER COMPOSITE**
BIOLOGISCH ABBAUBARER MEHRSCHICHTIGER VERBUNDSTOFF
COMPOSITE MULTICOUCHE BIODÉGRADABLE

(30) Priority: 28.09.2022 EP 22198527
(43) Date of publication of application: 06.08.2025
(73) Proprietor: aevoloop GmbH, 04109 Leipzig (DE)
(72) Inventor: WITT, Timo Benjamin, 67056 Ludwigshafen am Rhein (DE); AGARI, Michaela, 67056 Ludwigshafen am Rhein (DE); SIEGENTHALER, Kai Oliver, 67056 Ludwigshafen am Rhein (DE); KÜNKEL, Andreas, 67056 Ludwigshafen am Rhein (DE); MECKING, Stefan, 78457 Konstanz (DE); ECK, Marcel, 78464 Konstanz (DE)
(74) Representative: Eisenführ Speiser
(86) International application number: PCT/EP2023/076936
(87) International publication number: WO 2024/068864

(56) References cited:
- EP-B1- 2 774 951
- WO-A1-2015/086463
- WO-A1-2020/216803
- WO-A1-2022/144255

## Description

The present application relates to a biodegradable multilayer composite, in particular for packaging, to its use and to a process for preparing said biodegradable multilayer composite.

In the context of the present application "multilayer composite" means a composite comprising or consisting of two or more layers stacked on top of each other.

In the context of the present application "multilayer composite for packaging" means that said multilayer composite is suitable for packaging, but its application is not limited to packaging.

In the context of the present application "biodegradable" means that the composite is decomposed under the action of microorganisms, such as bacteria, fungi, algae etc., into water, carbon dioxide and/or methane and optionally by-products (residues, new biomass) which are non-toxic for the environment.

Biodegradability within the meaning of this application is given, for example, when the multilayer composite exhibits compostability according to DIN EN 13432 (December 2000, "Requirements for packaging recoverable through composting and biodegradation"). Compostability according to this standard refers to decomposition in industrial composting plants and means that a material after a specified time (maximum 6 months) under defined conditions of temperature, oxygen and moisture in the presence of microorganisms must have degraded to more than 90 % to water, carbon dioxide and biomass in the presence of microorganisms.

Biodegradability within the meaning of this application is not limited to applications for packaging.

Moreover, biodegradability within the meaning of this application is not exclusively linked to EN 13432 but is also understood in accordance with other applicable standards, e.g. ASTM D6400, EN 17033, EN 14855, DIN EN 17556, and OECD 301.

Biodegradability within the meaning of this application is given, for example, if the ratio of carbon released gaseous in the form of CO₂ to the total carbon content of the multilayer composite after 20 days is at least 30 %, preferably at least 60 % or at least 80 %, measured according to the ISO 14855 (2005) standard (Determination of the ultimate aerobic biodegradability of plastic materials under controlled composting conditions - Method by analysis of evolved carbon dioxide).

More specifically, the characteristic "biodegradable in soil" is fulfilled for polymer blends if these polymer blends have a percentage degree of biodegradation in 2 years of at least 90% according to DIN EN ISO 17556.

EP2774951B1 discloses a polymer mixture comprising:
i) from 98 to 99.99% by weight, based on components i to ii, of a polycondensate obtainable from the following monomers:
   a) at least one α,ω-C₁₈-C₃₀-dicarboxylic acid or a corresponding dicarboxylic acid derivative, and
   b) at least one α,ω-C₂-C₃₀-diol;
   or obtainable from the following monomer:
   a') ω-hydroxy-α-C₁₀-C₂₆-carboxylic acid;
ii) from 0.01 to 2% by weight, based on components i to ii, of at least one natural wax.

The aim of EP 2 774 951 B1 is improvement of the barrier function against water vapor, i.e. reduction of the transmission rate for water vapor.

WO 2022/096465 A1 discloses a degradable polymer blend of long-chain aliphatic polycondensates. Said polymer blend comprises:
(i) 1 to 99.9 weight-% of a first polyethylene-like polymer having a repetition unit (I)
   within its structure

      [-X¹-(CH₂)ₐ-X²-(CH₂)_{b}-] (I)
   wherein
   X¹ is selected from the group consisting of -C(=O)-O-group, -O-C(=O)-group, -O-C(=O)-O-group, -O-P(=O)(H)-O-group and -O-CH₂-O-group;
   X² is selected from the group consisting of -C(=O)-O-group, -O-C(=O)-group, -O-C(=O)-O-group, -O-P(=O)(H)-O-group and -O-CH₂-O-group;
   a, b are each an integer independently selected from the range from 2 to 200;
   wherein the first polyethylene-like polymer has in the range of from 89 to 99.5 mol% of methylene groups;
(ii) 0.1 to 99 weight-% of a second polymer;
wherein the sum of the weight-% of (i) and (ii) amounts to 100 weight-%.

EP 1 787 807 A1 discloses a polyglycolic acid resin-based multilayer sheet, comprising: a plant substrate sheet and a biodegradable resin layer laminated by melt-adhesion onto the plant substrate sheet, wherein said biodegradable resin layer comprises one or plural layers including at least a polyglycolic acid resin layer, and the multilayer sheet includes on the substrate sheet a melt-adhesion layer comprising a biodegradable resin exhibiting a melt viscosity of 10 to 5.0 × 10³ Pa*sec as measured at a temperature of 240 °C and a shear rate of 122 sec⁻¹ and having a melting point of at most 235 °C. The multilayer sheet has a laminate structure composed of biodegradable materials exerting little load to the environment at the time of disposable thereof. According to EP 1 787 807 A1, the multilayer sheet is excellent in oxygen-barrier property and moisture resistance, thus being suitable as a food container-forming material. Unfortunately, polyglycolic acid itself has a low hydrolytic stability, resulting in a low shelf life and difficulties in processing.

The publication "Potentially Biodegradable "Short-Long" Type Diol-Diacid Polyesters with Superior Crystallizability, Tensile Modulus, and Water Vapor Barrier" of L. Zhou et al. ACS Sustainable Chem. Eng., https://doi.org/10.1021/acssuschemeng.1c0675299) discloses studies of a series of "short-long" type long-chain polyesters. Said polyesters are designed and synthesized from short-chain α,ω-diols having 2 to 4, or 6 carbon atoms and long-chain α,ω-dicarboxylic acids having 10 to 16 carbon atoms via melt polycondensation. As expectable, it was found that the biodegradability decreases with increasing chain length between the ester bonds.

WO 2022/144255 A1 discloses a multilayer biodegradable film particularly suitable for use in the manufacture of packaging, comprising at least one layer (A) comprising at least one aliphatic-aromatic biodegradable polyester blended with an aliphatic polyester having at least 70% in moles of succinic acid, and at least one layer (B) comprising a polymer composition comprising an aliphatic-aromatic polymer.

Generally, in biodegradable polymeric materials the individual monomeric units are linked by functional groups which can be cleaved by microorganisms or their respective enzymes. Typically, said linking functional groups are highly polar and hydrophilic, e.g. ester groups. High hydrophilicity is inevitably accompanied by high water uptake and high water vapor permeability. Thus, biodegradable polymers generally have poor water vapor barrier properties which is detrimental to many applications, e.g. packaging, especially food packaging.

Similar considerations are valid for the oxygen barrier properties of biodegradable polymers. Basically, high crystallinity and/or a complex network of polar hydrogen bonds prevent non-polar molecules like oxygen to permeate through a polymer matrix. However, biodegradable polymers such as polyesters need to have a low crystallinity to promote fast biodegradation. Indeed, crystalline polymers degrade typically slower than amorphous polymers.

Thus, there is an ongoing need for materials, especially packaging materials, which are biodegradable and at the same time are stable against humidity and have a low transmission rate for vapor and/or oxygen, and can be processed by means of usual techniques like extrusion, heat-pressing, injection molding, sealing or lamination.

It is an object of the present invention to provide a multilayer composite which combines biodegradability with one, two or more of the above-mentioned further requirements.

These and other objects are fulfilled by a biodegradable multilayer composite according to the present invention.

A biodegradable multilayer composite according to the present invention comprises or consists of
(i) one or more layers comprising one or more aliphatic polycondensates A comprising
   (a) structural units formed from one or more aliphatic α,ω-dicarboxylic acids having 18 to 30 carbon atoms
      and
   (b) structural units formed from one or more aliphatic α,ω-diols having 2 to 8 carbon atoms, wherein polycondensate A does not contain structural units formed from any aromatic dicarboxylic acid, wherein layer (i) does not comprise natural wax,
(ii) one or more layers having a composition different from layer (i)
   said layers (ii) comprising independent from each other one or more of
   - biodegradable polymers different from aliphatic polycondensates A as defined above, wherein said biodegradable polymers are selected from the group consisting of polyesters, polyamides, polycarbonates, polyurethanes, polyethers, polyols, chitosan, chitin, cellulose hydrate, callose, starch, starch based materials, shellac, proteins and protein based materials, and copolymers thereof
      and
   - inorganic materials selected from the group consisting of metals, metalloids, oxides of metals, oxides of metalloids, nitrides of metals and nitrides of metalloids.

A biodegradable multilayer composite according to the invention may have one or more layers (i) and one or more layers (ii) in any arbitrary order. A multilayer composite according to the invention may comprise one or more further layers, and said one or more layers (i), said one or more layers (ii) and said one or more further layers may be in any arbitrary order.

For instance, a layer (i) as defined above is embedded between two layers (ii) as defined above, wherein said two layers (ii) have the same or a different composition, or a layer (ii) as defined above is embedded between two layers (i) as defined above, wherein said two layers (i) have the same or a different composition.

If the biodegradable multilayer composite comprises more than one layer (i), each of said layers (i) may comprise the same aliphatic polycondensate A, or the aliphatic polycondensate A is different in the different layers (i).

Surprisingly it was found that a multilayer composite according to the present invention is biodegradable, preferably exhibits compostability according to EN 13432, has a low transmission rate for one or both of vapor and oxygen, and at the same time may be stable against humidity, may be mechanically stable, and can be processed by means of usual techniques like extrusion, heat-pressing, injection molding or lamination.

For multilayer composites comprising an aliphatic polycondensate A as defined above, which has structural units formed from one or more aliphatic α,ω-dicarboxylic acids having 18 to 30 carbon atoms, the skilled person would not expect compostability according to EN 13432, since biodegradability in general decreases with increasing chain length between the ester bonds (cf. the above-mentioned publication of L. Zhou et al. (ACS Sustainable Chem. Eng., https://doi.org/10.1021/acssuschemeng.1c0675299)), and in an aliphatic polycondensate A as defined above the chain length between the ester bonds is even longer than in the "Short-Long" type diol-diacid polyesters disclosed in the above-mentioned publication of L. Zhou et al.

The one or more layers (i) of the biodegradable multilayer composite according to the invention comprise or consist of one or more aliphatic polycondensates A comprising or consisting of
(a) structural units formed from one or more aliphatic α,ω-dicarboxylic acids having 18 to 30 carbon atoms
   and
(b) structural units formed from one or more aliphatic α,ω-diols having 2 to 8 carbon atoms.

Aliphatic polycondensate A is biodegradable, preferably the aliphatic polycondensate A is biodegradable according to EN 13432 (December 2000).

Thus, aliphatic polycondensate A is a polyester obtainable from polycondensation of one or more aliphatic α,ω-dicarboxylic acids having 18 to 30 carbon atoms with one or more aliphatic α,ω-diols having 2 to 8 carbon atoms.

Aliphatic polycondensate A is an aliphatic polyester, i.e. aliphatic polycondensate A substantially does not contain structural units formed from any aromatic dicarboxylic acid. Preferably, aliphatic polycondensate A does not contain any aromatic structure units.

Except for structural units formed from any aromatic dicarboxylic acid, the presence of structural units different from structural units (a) and (b) as defined above is not excluded for aliphatic polycondensate A.

Beside ester groups, an aliphatic polycondensate A may contain further functional groups, e.g. selected from amide, carbonate, urethane, urea, acetal, phosphonate, thioester and carboxylic acid anhydride groups.

In certain preferred cases, aliphatic polycondensate A comprises structural units (a) formed from a first aliphatic α,ω-dicarboxylic acid having 18 to 30 carbon atoms, and further comprises structural units formed from one or more other aliphatic α,ω-dicarboxylic acids having 14 to 30 carbon atoms. Said structural units formed from one or more other aliphatic α,ω-dicarboxylic acids having 14 to 30 carbon atoms belong to the above-defined structural units (a), if said one or more other aliphatic α,ω-dicarboxylic acids have 18 to 30 carbon atoms. Said structural units formed from one or more other aliphatic α,ω-dicarboxylic acids having 14 to 30 carbon atoms do not belong to the above-defined structural units (a), if said one or more other aliphatic α,ω-dicarboxylic acids have 14 to 17 carbon atoms.

In certain preferred cases, said aliphatic polycondensate A comprises or consists of
70 wt% or more of structural units (a) formed from a first aliphatic α,ω-dicarboxylic acid having 18 to 30 carbon atoms
   and
30 wt% or less of structural units formed from one or more other aliphatic α,ω-dicarboxylic acids having 14 to 30 carbon atoms,
based on the total amount of structural units formed from aliphatic α,ω-dicarboxylic acids having 14 to 30 carbon atoms in aliphatic polycondensate A.

Thus, based on the total amount of structural units formed from aliphatic α,ω-dicarboxylic acids having 14 to 30 carbon atoms in aliphatic polycondensate A, 70 wt% or more are structural units (a) formed from a first aliphatic α,ω-dicarboxylic acid having 18 to 30 carbon atoms and 30 wt% or less are structural units formed from one or more other aliphatic α,ω-dicarboxylic acids having 14 to 30 carbon atoms.

Such aliphatic polycondensate A is a polyester obtainable by polycondensation of a reaction mixture comprising a first aliphatic α,ω-dicarboxylic acid having 18 to 30 carbon atoms, and one or more other aliphatic α,ω-dicarboxylic acids having 14 to 30 carbon atoms, with one or more aliphatic α,ω-diols having 2 to 8 carbon atoms. Preferably said reaction mixture comprises or consists of
70 wt% or more of a first aliphatic α,ω-dicarboxylic acid having 18 to 30 carbon atoms and
30 wt% or less of other aliphatic α,ω-dicarboxylic acids having 14 to 30 carbon atoms,
based on the total amount of aliphatic α,ω-dicarboxylic acids having 14 to 30 carbon atoms in the reaction mixture.

In certain preferred cases, the structural units (a) are formed from one or more aliphatic α,ω-dicarboxylic acids having 18 to 30 carbon atoms which are saturated and/or are linear and/or have an even number of carbon atoms. Accordingly, in said preferred cases, the structural units (a) are saturated and/or are linear and/or have an even number of carbon atoms.

More preferably, the structural units (a) are formed from one or more aliphatic α,ω-dicarboxylic acids having 18 to 30 carbon atoms which are saturated and are linear and/or have an even number of carbon atoms. Accordingly, in said preferred cases, the structural units (a) are saturated and are linear and/or have an even number of carbon atoms.

Further preferably, the structural units (a) are formed from one or more aliphatic α,ω-dicarboxylic acids having 18 to 30 carbon atoms which are saturated and are linear and have an even number of carbon atoms. Accordingly, in said further preferred cases the structural units (a) are saturated and are linear and have an even number of carbon atoms.

Preferred aliphatic polycondensates A have structural units (a) having 18 to 30 carbon atoms, more preferably 18 to 26 carbon atoms, and structural units (b) having 2 carbon atoms. Such preferred aliphatic polycondensate A is a polyester obtainable by polycondensation of one or more aliphatic α,ω-dicarboxylic acids having 18 to 30 carbon atoms with ethylene glycol.

Preferably, in aliphatic polycondensate A the structural units (a) have 18 to 28 carbon atoms, more preferably 18 to 26 carbon atoms.

Preferably, in aliphatic polycondensate A the structural units (b) have 2 to 6 carbon atoms, preferably 2 to 4 carbon atoms.

Further preferably, in aliphatic polycondensate A the structural units (a) have 18 to 28 carbon atoms, more preferably 18 to 26 carbon atoms, and the structural units (b) have 2 to 6 carbon atoms, preferably 2 to 4 carbon atoms. Such preferred aliphatic polycondensate A is a polyester obtainable by polycondensation of one or more aliphatic α,ω-dicarboxylic acids having 18 to 28 carbon atoms, more preferably 18 to 26 carbon atoms, with one or more aliphatic α,ω-diols having 2 to 6 carbon atoms, preferably 2 to 4 carbon atoms.

More preferably, in aliphatic polycondensate A the structural units (a) have 18 to 26 carbon atoms, and the structural units (b) have 2 to 4 carbon atoms. Such preferred aliphatic polycondensate A is a polyester obtainable by polycondensation of one or more aliphatic α,ω-dicarboxylic acids having 18 to 26 carbon atoms, with one or more aliphatic α,ω-diols having 2 to 4 carbon atoms.

In certain cases, aliphatic polycondensate A further (i.e. beside structural units formed from dicarboxylic acids and structural units formed from diols as defined above) comprises structural units (c) formed from one or more trifunctional alcohols, e.g. 1,1,1-trimethylolpropane, 1,1,1-trimethylolethane, pentaerythrite, polyethertriols, and in particular glycerol, wherein preferably the weight fraction of structural units (c) is 2 wt% or less, based on the total weight of the structural units (a) and (b). Said trifunctional alcohols provide branching units.

In certain cases, aliphatic polycondensate A further (i.e. beside structural units (a) and (b) as defined above) comprises structural units (d) formed from one or more difunctional or oligofunctional species selected from the group consisting of isocyanates, isocyanurates, peroxides, epoxides, oxazolines, oxazines, caprolactams, carboxylic acid anhydrides and carbodiimides, wherein preferably the weight fraction of structural units (d) is 4 wt% or less, based on the total weight of the structural units (a) and (b). Said isocyanates, isocyanurates, peroxides, epoxides, oxazolines, oxazines, caprolactams, carboxylic acid anhydrides and carbodiimides act as chain extenders. A preferred chain extender is hexamethylenediisocyanate.

In certain cases, aliphatic polycondensate A comprises structural units (a), (b), (c) and (d) as defined above.

An aliphatic polycondensate A as defined above may be obtainable by a polycondensation reaction of one or more aliphatic α,ω-dicarboxylic acids having 18 to 30 carbon atoms, preferably 18 to 28 carbon atoms, and one or more aliphatic α,ω-diols having 2 to 8 carbon atoms, further preferably by a polycondensation reaction of one or more aliphatic α,ω-dicarboxylic acids having 18 to 26 carbon atoms with one or more aliphatic α,ω-diols having 2 to 8 carbon atoms, more preferably 2 to 6 carbon atoms, most preferably by a polycondensation reaction of n-octadecanedioic acid with ethylene glycol, in each case catalyzed by an organometallic compound. Preferably said organometallic compound which catalyzes the polycondensation is an organometallic compound of a metal selected from the group consisting of Sn, Ti, Sb, Co and Pb, most preferably by an organometallic compound selected from the group consisting of titanium tetrabutoxide, titanium tetraisopropoxide and dibutyl tin oxide.

An aliphatic polycondensate A, especially when obtained by a polycondensation reaction using one of the above-mentioned catalysts, provides an advantageously low amount of undesired ether linkages. Preferably, aliphatic polycondensate A has an amount of ether linkages of 5 mol% or less, preferably 2 mol% or less, based on the amount of structural units (b) formed from one or more aliphatic α,ω-diols having 2 to 8 carbon atoms in aliphatic polycondensate A. The amount of ether linkages is determined by ¹H NMR spectroscopy on a 400 MHz instrument in tetrachloroethane-d2 (deuterated tetrachloroethane) at 120 °C, usually with up to 1024 scans. More preferably, aliphatic polycondensate A substantially does not have ether linkages.

Preferably, the total weight fraction of aliphatic polycondensates A is 20 wt% to 100 wt%, more preferably 50 wt% to 100 wt%, and even more preferably 70 wt% to 100 wt%, based on the weight of layer (i).

Typically, a layer (i) as defined above is a standalone layer. In the context of the present invention a standalone layer means a layer that exhibits sufficient mechanical stability to be further processed without any other layer attached to it. For example, a standalone layer has sufficient mechanical stability to be coated by or laminated against another layer.

A layer (i) as defined above may have a thickness of 1 µm to 100 µm, more preferably 5 µm to 50 µm.

A layer (i) comprising or consisting of an aliphatic polycondensate A may act as a barrier against water vapor transmission, so that the water vapor transmission rate of the biodegradable multilayer composite is reduced. Preferably, layer (i) comprising or consisting of an aliphatic polycondensate A is sealable, so that sealing seams having a low water vapor transmission rate are obtainable.

A layer (i) may further contain one or more biodegradable polymers B different from biodegradable polycondensates A, wherein said biodegradable polymer B is selected from the group consisting of polyesters, polyamides, polycarbonates, polyurethanes, polyethers, cellulose hydrate, polyols, chitosan, chitin, callose, starch, starch based materials, and proteins and protein-based materials, and copolymers thereof.

The one or more biodegradable polymers (B) in layer (i) may be of synthetic origin like polyesters, polyamides, polycarbonates, polyurethanes, polyethers, polyols, and copolymers thereof, or of natural origin like polyols, shellac, chitosan, chitin, callose, starch, and proteins, wherein such polymers of natural origin may be modified or processed further, e.g. by chemical treatment, for improving their durability and processability (e.g. by imparting thermoplastic behavior). For instance, polymer B may be modified starch, e.g. thermoplastic starch; or modified protein, e.g. thermoplastic protein; or cellulose hydrate (also known as cellophane). Modified starch as defined above is herein also referred to as "starch based material". Modified protein as defined above is herein also referred to as "protein based material".

Particularly preferable, layer (i) comprises or consists of an aliphatic polycondensate A comprising or consisting of
- linear structural units (a) having 18 carbon atoms,
- structural units formed from one or more aliphatic α,ω-dicarboxylic acids having 14 to 30 carbon atoms, except for linear aliphatic α,ω-dicarboxylic acid having 18 carbon atoms (n-octadecanedioic acid)
   wherein preferably based on the total amount of structural units formed from aliphatic α,ω-dicarboxylic acids having 14 to 30 carbon atoms, 70 wt% or more are linear structural units (a) having 18 carbon atoms, and 30 wt% or less are structural units formed from one or more aliphatic α,ω-dicarboxylic acids having 14 to 30 carbon atoms except for linear structural units having 18 carbon atoms,
   and
- structural units (b) having 2, 3 or 4 carbon atoms, preferably 2 carbon atoms.

Such particularly preferred aliphatic polycondensate A is a polyester obtainable by polycondensation of a reaction mixture of linear aliphatic α,ω-dicarboxylic acid having 18 carbon atoms (n-octadecanedioic acid), and one or more other aliphatic α,ω-dicarboxylic acids having 14 to 30 carbon atoms, with one or more aliphatic α,ω-diols having 2 to 4 carbon atoms, preferably with ethylene glycol. Preferably said reaction mixture of α,ω-dicarboxylic acids comprises or consists of
70 wt% or more of linear aliphatic α,ω-dicarboxylic acid having 18 carbon atoms (n-octadecanedioic acid)
   and
30 wt% or less of other aliphatic α,ω-dicarboxylic acids having 14 to 30 carbon atoms,
based on the total amount of aliphatic α,ω-dicarboxylic acids having 14 to 30 carbon atoms in the reaction mixture.

Further preferable, layer (i) comprises or consists of an aliphatic polycondensate A comprising or consisting of
- linear structural units (a) having 18 carbon atoms,
- structural units formed from one or more aliphatic α,ω-dicarboxylic acids having 14 to 17 or 19 to 30 carbon atoms,)
   wherein preferably based on the total amount of structural units formed from aliphatic α,ω-dicarboxylic acids having 14 to 30 carbon atoms, 70 wt% or more are linear structural units (a) having 18 carbon atoms, and 30 wt% or less are structural units formed from one or more aliphatic α,ω-dicarboxylic acids having 14 to 17 or 19 to 30 carbon atoms
   and
- structural units (b) having 2, 3 or 4 carbon atoms, preferably 2 carbon atoms.

Such particularly preferred aliphatic polycondensate A is a polyester obtainable by polycondensation of a reaction mixture of linear aliphatic α,ω-dicarboxylic acid having 18 carbon atoms (n-octadecanedioic acid), and one or more other aliphatic α,ω-dicarboxylic acids having 14 to 17 of 19 to 30 carbon atoms, with one or more aliphatic α,ω-diols having 2 to 4 carbon atoms, preferably with ethylene glycol. Preferably said reaction mixture of α,ω-dicarboxylic acids comprises or consists of
70 wt% or more of linear aliphatic α,ω-dicarboxylic acid having 18 carbon atoms (n-octadecanedioic acid)
   and
30 wt% or less of other aliphatic α,ω-dicarboxylic acids having 14 to 17 or 19 to 30 carbon atoms,
based on the total amount of aliphatic α,ω-dicarboxylic acids having 14 to 30 carbon atoms in the reaction mixture.

Surprisingly it has been found that such aliphatic polycondensate A which has structural units formed from n-octadecanedioic acid and structural units (b) having 2, 3 or 4 carbon atoms, preferably 2 carbon atoms, exhibits compostability according to EN 13432, although it has a longer chain length between the ester bonds than the "Short-Long" type diol-diacid polyesters disclosed in the above-mentioned publication of L. Zhou et al. (ACS Sustainable Chem. Eng., https://doi.org/10.1021/acssuschemenq.1c0675299), who found that biodegradability in general decreases with increasing chain length between the ester bonds.

The aliphatic polycondensate A which has structural units formed from one or more aliphatic α,ω-dicarboxylic acids having 18 to 30 carbon atoms, e.g. n-octadecanedioic acid and structural units (b) having aliphatic α,ω-diols having 2 to 8 carbon atoms, preferably 2, 3 or 4 carbon atoms, in particular preferably 2 carbon atoms as defined above, may be obtainable by a polycondensation reaction of one or more aliphatic α,ω-dicarboxylic acids having 18 to 30 carbon atoms, preferably 18 to 28 carbon atoms, and one or more aliphatic α,ω-diols having 2 to 8 carbon atoms, further preferably by a polycondensation reaction of one or more aliphatic α,ω-dicarboxylic acids having 18 to 26 carbon atoms with one or more aliphatic α,ω-diols having 2 to 8 carbon atoms, more preferably 2 to 6 carbon atoms and in particular preferred 2, 3, or 4 carbon atoms, most preferably by a polycondensation reaction of n-octadecanedioic acid with ethylene glycol, in each case catalyzed by an organometallic compound. Preferably said organometallic compound which catalyzes the polycondensation is an organometallic compound of a metal selected from the group consisting of Sn, Ti, Sb, Co and Pb, most preferably by an organometallic compound selected from the group consisting of titanium tetrabutoxide, titanium tetraisopropoxide and dibutyl tin oxide.

An aliphatic polycondensate A which has structural units formed from n-octadecanedioic acid and structural units (b) having 2, 3 or 4 carbon atoms, preferably 2 carbon atoms, especially when obtained by a polycondensation reaction using one of the above-mentioned catalysts, provides an advantageously low amount of undesired ether linkages. Preferably, aliphatic polycondensate A has an amount of ether linkages of 5 mol% or less, preferably 2 mol% or less, based on the amount of structural units (b) formed from one or more aliphatic α,ω-diols having 2 to 8 carbon atoms in aliphatic polycondensate A. The amount of ether linkages is determined by ¹H NMR spectroscopy on a 400 MHz instrument in tetrachloroethane-d2 (deuterated tetrachloroethane) at 120 °C, usually with up to 1024 scans. More preferably, aliphatic polycondensate A substantially does not have ether linkages.

Preferably, the total weight fraction of aliphatic polycondensates A which have structural units formed from n-octadecanedioic acid and structural units (b) having 2, 3 or 4 carbon atoms, preferably 2 carbon atoms, is 20 wt% to 100 wt%, more preferably 50 wt% to 100 wt%, and even more preferably 70 wt% to 100 wt%, based on the weight of layer (i).

Typically, a layer (i) comprising or consisting of an aliphatic polycondensate A which has structural units formed from n-octadecanedioic acid and structural units (b) having 2, 3 or 4 carbon atoms, preferably 2 carbon atoms, is a standalone layer.

A layer (i) comprising or consisting of an aliphatic polycondensate A which has structural units formed from n-octadecanedioic acid and structural units (b) having 2, 3 or 4 carbon atoms, preferably 2 carbon atoms, may have a thickness of 1 µm to 100 µm, more preferably 5 µm to 50 µm.

A layer (i) comprising or consisting of an aliphatic polycondensate A which has structural units formed from n-octadecanedioic acid and structural units (b) having 2, 3 or 4 carbon atoms, preferably 2 carbon atoms, may act as a barrier against water vapor transmission, so that the water vapor transmission rate of the biodegradable multilayer composite is reduced. Preferably, layer (i) comprising or consisting of an aliphatic polycondensate A is sealable, so that sealing seams having a low water vapor transmission rate are obtainable.

A layer (i) comprising or consisting of an aliphatic polycondensate A which has structural units formed from n-octadecanedioic acid and structural units (b) having 2, 3 or 4 carbon atoms, preferably 2 carbon atoms, may further contain one or more biodegradable polymers B different from biodegradable polycondensates A, wherein said biodegradable polymer B is selected from the group consisting of polyesters, polyamides, polycarbonates, polyurethanes, polyethers, cellulose hydrate, polyols, chitosan, chitin, callose, starch, starch based materials, and proteins and protein-based materials, and copolymers thereof.

The one or more biodegradable polymers (B) in layer (i) may be of synthetic origin like polyesters, polyamides, polycarbonates, polyurethanes, polyethers, polyols, and copolymers thereof, or of natural origin like polyols, shellac, chitosan, chitin, callose, starch, and proteins, wherein such polymers of natural origin may be modified or processed further, e.g. by chemical treatment, for improving their durability and processability (e.g. by imparting thermoplastic behavior). For instance, polymer B may be modified starch, e.g. thermoplastic starch; or modified protein, e.g. thermoplastic protein; or cellulose hydrate (also known as cellophane). Modified starch as defined above is herein also referred to as "starch based material". Modified protein as defined above is herein also referred to as "protein based material".

The one or more layers (ii) of the biodegradable multilayer composite according to the invention have a composition different from the one or more layers (i). The one or more layers (ii) independent from each other comprise or consist of one or more materials selected from the group consisting of
- biodegradable polymers B different from aliphatic polycondensates A, wherein said biodegradable polymers B are selected from the group consisting of polyesters, polyamides, polycarbonates, polyurethanes, polyethers, shellac, cellulose hydrates polyols, chitosan, chitin, callose, starch, starch based materials, proteins and protein based materials, and copolymers thereof,
   and
- inorganic materials selected from the group consisting of metals, metalloids, oxides of metals, oxides of metalloids, nitrides of metals and nitrides of metalloids.

The one or more biodegradable polymer B in layer (ii) may be of synthetic origin like certain polyesters, certain polyamides, polycarbonates, polyurethanes, polyethers, certain polyols, and copolymers thereof; or of natural origin like certain polyesters, certain polyamides, certain polyols, shellac, chitosan, chitin, callose, starch, and proteins, wherein such polymers of natural origin may be modified or processed further, e.g. by chemical treatment, for improving their durability and processability (e.g. by imparting thermoplastic behavior). For instance, polymer B may be modified starch, e.g. thermoplastic starch; or modified protein, e.g. thermoplastic protein; or cellulose hydrate (also known as cellophane). Modified starch as defined above is herein also referred to as "starch based material". Modified protein as defined above is herein also referred to as "protein based material".

Cellulose does not belong to the biodegradable polymers B as defined above. Preferably, layer (ii) substantially does not contain cellulose fibers.

Preferably, the one or more layers (ii) as defined above do not comprise an aliphatic polycondensate A as defined above.

A layer (ii) comprising or consisting of a biodegradable polymer B as defined above may be in the form of a standalone layer, or in the form of a coating, e.g. a lacquer deposited on another layer of the biodegradable multilayer composite, or an extrusion coating, e.g. with a hot melt; or in the form of an adhesive deposited on another layer of the biodegradable multilayer composite.

A layer (ii) which is a standalone layer typically may have a thickness of 1 µm to 100 µm, more preferably 5 µm to 50 µm.

The one or more layers (ii) as defined above are not in the form of a nonwoven. Typically, the one or more layers (ii) do not comprise fibers.

A preferred polyol is polyvinyl alcohol (PVOH).

A preferred protein is casein, in particular thermoplastic casein.

Other preferred polymers B belong to the group of polyesters.

Beside ester groups, a biodegradable polymer B belonging to the group of polyesters may contain further functional groups, e.g. selected from amide, carbonate, urethane, urea, acetal, phosphonate, ether, thioester and carboxylic acid anhydride groups.

In certain cases, said polyester further comprises structural units formed from one or more trifunctional alcohols (e.g. 1,1,1-trimethylolpropane, 1,1,1-trimethylolethane, pentaerythrite, polyethertriols, and in particular glycerol), and/or structural units formed from one or more difunctional or oligofunctional species selected from the group consisting of isocyanates, isocyanurates, peroxides, epoxides, oxazolines, oxazines, caprolactams, carboxylic acid anhydrides and carbodiimides. Said trifunctional alcohols provide branching units. Said isocyanates, isocyanurates, peroxides, epoxides, oxazolines, oxazines, caprolactams, carboxylic acid anhydrides and carbodiimides act as chain extenders. A preferred chain extender is hexamethylenediisocyanate.

One preferred group of polyesters are polycondensates comprising or consisting of structural units formed from one or more aliphatic dicarboxylic acids having 4 to 13 carbon atoms and structural units formed from one or more diols having 2 to 8 carbon atoms, e.g. polybutylene succinate (PBS), polybutylene succinate-co-adipate (PBSA), polybutylene succinate-co-sebacate (PBSSe), polybutylene succinate-co-azelate (PBSAz), polybutylene succinate-co-brassylate (PBSBr), and polybutylene succinate-co-dodecanoate (PBSDo).

In certain cases, said polyester further comprises structural units formed from one or more trifunctional alcohols, and/or structural units formed from one or more difunctional or oligofunctional species selected from the group consisting of isocyanates, isocyanurates, peroxides, epoxides, oxazolines, oxazines, caprolactams, carboxylic acid anhydrides and carbodiimides. Said trifunctional alcohols provide branching units. Said isocyanates, isocyanurates, peroxides, epoxides, oxazolines, oxazines, caprolactams, carboxylic acid anhydrides and carbodiimides act as chain extenders. A preferred chain extender is hexamethylenediisocyanate.

Another preferred group of polyesters are polycondensates comprising or consisting of structural units formed from one or more aliphatic w-hydroxy-carboxylic acids having 10 to 26 carbon atoms. Said w-hydroxy-carboxylic acids having 10 to 26 carbon atoms are obtainable as described in WO2011/008232. For further information on such polyesters, see also EP 2 774 951 B1. Preferred w-hydroxy-carboxylic acids are ω-hydroxy-C₁₄-carboxylic acid, ω-hydroxy-C₁₅-carboxylic acid, ω-hydroxy-C₁₈-carboxylic acid, ω-hydroxy-C₁₉-carboxylic acid, ω-hydroxy-C₂₃-carboxylic acid and ω-hydroxy-C₂₆-carboxylic acid. Most preferred are ω-hydroxy-C₁₄-carboxylic acid, ω-hydroxy-C₁₆-carboxylic acid and ω-hydroxy-C₁₈-carboxylic acid.

Another preferred group of polyesters are polycondensates comprising or consisting of structural units formed from one or more *β*-hydroxy-carboxylic acids having 4 to 14 carbon atoms, e.g. poly-3-hydroxybutyrate (PHB), poly-3-hydroxybutyrate-co-3-hydroxyvalerate (P(3HB)-co-P(3HV) or PHBV), poly-3-hydroxybutyrate-co-4-hydroxybutyrate (P(3HB)-coP(4HB)) and poly-3-hydroxybutyrate-co-3-hydroxyhexanoate (P(3HB)-co-P(3HH) or PHBH).

Another preferred group of polyesters are polycondensates comprising or consisting of structural units formed from one or more hydroxy-carboxylic acids having a hydroxy group that is not in *β*-position and having 2 to 9 carbon atoms, e.g. polycaprolactone (PCL), poly-2-hydroxybutyrate (P2HB), poly-4-hydroxybutyrate (P4HB), polylactic acids (PLA) and polyglycolic acid (PGA).

A further preferred group of polyesters are polycondensates comprising or consisting of
- structural units formed from one or more aliphatic dicarboxylic acids having 4 to 18 carbon atoms, preferably succinic acid, adipic acid, azelaic acid, sebacic acid, brassylic acid and suberic acid, and
- structural units formed from one or more aromatic dicarboxylic acids, preferably terephthalic acid or furandicarboxylic acid, and
- structural units formed from one or more diols having 2 to 6 carbon atoms, preferably 1,4-butanediol or 1,3 propanediol,
e.g. polybutylene succinate-co-terephthalate (PBST), polybutylene adipate-co-terephthalate (PBAT), polybutylene adipate-co-azelate-co-terephthalate (PBAAzT), polybutylene adipate-co-sebacate-co-terephthalate (PBASeT), polybutylene azelate-co-terephthalate (PBAzT), polybutylene sebacate-co-terephthalate (PBSeT), polybutylene sebacate-co-furanoate (PBSeF), polybutylene azelate-co-furanoate (PBAzF), and polybutylene adipate-co-furanoate (PBAF). Such polycondensates are herein referred to as "aliphatic-aromatic polyesters". Further information on "aliphatic-aromatic polyesters" as defined above are provided in non-prepublished patent application WO 2023/052360 A1 of the same applicant and in EP 2 920 244 B1.

In certain cases, said aliphatic-aromatic polyester further comprises structural units formed from one or more trifunctional alcohols (e.g. 1,1,1-trimethylolpropane, 1,1,1-trimethylolethane, pentaerythrite, polyethertriols, and in particular glycerol), and/or structural units formed from one or more difunctional or oligofunctional species selected from the group consisting of isocyanates, isocyanurates, peroxides, epoxides, oxazolines, oxazines, caprolactams, carboxylic acid anhydrides and carbodiimides. Said trifunctional alcohols provide branching units. Said isocyanates, isocyanurates, peroxides, epoxides, oxazolines, oxazines, caprolactams, carboxylic acid anhydrides and carbodiimides act as chain extenders. A preferred chain extender is hexamethylenediisocyanate.

Preferably, biodegradable polymer B is selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid (PLA), polycaprolactone (PCL) and copolymers and blends thereof.

A layer (ii) comprising one or more of polyesters B as defined above may serve the function of imparting structure and mechanical stability to the multilayer composite. Moreover, polyesters B may be selected to provide or to adjust one or more properties of e.g. processability, optical characteristics (e.g. optical transmittance), barrier properties against oil and grease, barrier properties against liquids, depending on the specific selection of the one or more polyesters B.

A layer (ii) comprising one or more of polyvinyl alcohol, polyglycolic acid, proteins, protein-based materials (as defined above, in particular thermoplastic proteins), starch and starch based materials (as defined above, in particular thermoplastic starch) may act as a barrier against oxygen transmission, so that the oxygen transmission rate of the biodegradable multilayer composite is reduced. Such layer (ii) may also contribute to the adjustment of mechanical properties to further process steps or to application requirements, e.g. sealability, and compostability.

A biodegradable polymer B may act as an adhesive towards layer (i) or towards any other layer of the biodegradable multilayer composite. For instance, certain polyurethanes may act as an adhesive. Such polyurethane adhesive may be in the form of a dispersion adhesive or in the form of a hot-melt-adhesive.

Preferred hot-melt adhesives have a glass transition temperature below the temperature range of usual application of the biodegradable multilayer composite to avoid brittleness, and a melting temperature above the temperature range of usual application of the biodegradable multilayer composite.

A layer (ii) comprising or consisting of polyurethane which may act as an adhesive, may be formed from a polyurethane dispersion, especially from an aqueous dispersion of polyurethane.

A layer formed from a polyurethane dispersion is disclosed in WO 2021/175676 A1 and non-prepublished patent application WO 2023/052360 A1 of the same applicant. In said layer, at least 60 wt% of the polyurethane present in layer (ii) is formed from
a1) at least one diisoccyanate
a2) at least one polyesterole
a3) at least one bifunctional acid selected from the group consisting of dihydroxycarboxylic acids and diaminocarboxylic acids
wherein the polyurethane has a glass transition temperature below 20 °C, or has a melting temperature of 20°C or less and a melting enthalpy below 10 J/g.

A layer (ii) comprising or consisting of one or more inorganic materials selected from the group consisting of metals, metalloids, oxides of metals, oxides of metalloids, nitrides of metals and nitrides of metalloids is obtainable by a gas phase deposition technique, e.g. PVD (physical vapor deposition), CVD (chemical vapor deposition), PECVD (plasma-enhanced chemical vapor deposition), PACVD (plasma-assisted CVD) or ALD (atomic layer deposition).

Preferred metals are aluminum, titanium, zirconium, hafnium and their alloys, more preferably aluminum, zirconium, and titanium are chosen.

A preferred metalloid is silicon.

Preferred oxides of metals are oxides of aluminum.

Preferred oxides of metalloids are oxides of silicon.

Preferred nitrides of metals are nitrides of aluminum.

Preferred nitrides of metalloids are nitrides of silicon.

The amount of inorganic materials as defined above in the biodegradable multilayer composite has to be sufficiently low such that biodegradability of the multilayer composite is not compromised. This is achieved by a low thickness of layer (ii) comprising or consisting of one or more inorganic materials as defined above. Preferably, a layer (ii) comprising or consisting of one or more inorganic materials as defined above has a thickness of 5 nm to 300 nm, more preferably 10 nm to 150 nm.

A layer (ii) comprising or consisting of one or more inorganic materials as defined above is typically not in the form of a standalone layer, but in the form of a coating deposited on a layer (i) as defined above, which is a standalone layer, or on another layer (ii) comprising a biodegradable polymer B as defined above, wherein said other layer (ii) is a standalone layer.

A layer (ii) comprising or consisting of one or more inorganic materials as defined above may act as a barrier against water and oxygen transmission, so that the water and oxygen transmission rate of the biodegradable multilayer composite is reduced.

A biodegradable multilayer composite according to the invention may further comprise one or more layers (iii) each comprising or consisting of a nonwoven made of fibers. Said fibers may be natural fibers or chemical fibers of natural polymers. Natural fibers are typically cellulose fibers. Cellulose fibers may be obtainable from vegetal sources like wood, rags, grass, silphie and bagasse, and from recycling of cellulose-fiber containing materials like paper. Chemical fibers of natural polymers are obtainable by chemical treatment of natural polymers like cellulose and chitin. A preferred chemical fiber of a natural polymer is viscose (obtainable by chemical treatment of cellulose).

The non-woven may be obtainable by common state of the art papermaking-techniques, or other wet-lying techniques. Thus, layer (iii) may be in the form of paper, paperboard or cardboard. Layer (iii) may also be obtainable by means of a dry fiber molding process or dry pulp molding process.

Typically, a layer (iii) as defined above is a standalone layer.

A layer (iii) as defined above may have a thickness in the range of 10 µm to 500 µm, more preferably 30 µm to 300 µm.

The presence of one or more layers (iii) may increase the mechanical stability of a biodegradable multilayer composite according to the invention and enables compatibility with paper recycling.

A biodegradable multilayer composite according to the invention may have one or more layers (i), one or more layers (ii) and one or more layers (iii) in any arbitrary order.

Any of layers (i), (ii) and - if present - (iii) as defined above may comprise one or more additives selected from the group consisting of stabilizers; nucleating agents; slip agents, lubricants, demolding agents and release agents, e.g. stearates especially calcium stearate, and fatty acid esters or amides (erucamide, stearamide, etc.); plasticizers, e.g. citric acid esters (particularly tributyl acetylcitrate), glycerol esters (e.g. triacetin or ethylene glycol derivatives, surfactants), polysorbates, palmitates or laurates; waxes, for example, synthetic erucamide, synthetic stearamide, synthetic behenamide, compatibilizers such as copolymers bearing reactive groups like epoxides (e.g. glycidyl methacrylate); antistatic agents; UV absorbers; UV stabilizers; antifoggants; dyes; organic fillers such as starch and cellulose (wherein cellulose is not preferred for layer (ii), see above); inorganic fillers such as calcium carbonate, carbon black, graphite, talc, iron oxide, calcium sulfate, calcium chloride, dolomite, kaolin, silicon dioxide, sodium carbonate, titanium dioxide, silicate, wollastonite, mica, montmorillonite, glass fibers, and mineral fibers. Such additives are known in the field of packaging, especially food packaging. Selection of suitable additives in suitable amounts belongs to the common general knowledge of the skilled person. Any of layers (ii) and, if present, (iii) may comprise natural waxes.

In a biodegradable multilayer composite according to the invention a layer (i) as defined above, a layer (ii) as defined above and - if present - a layer (iii) as defined above may be directly adjacent another layer (i), (ii) or (iii) as defined above, or a layer (i) as defined above, a layer (ii) as defined above and - if present - a layer (iii) as defined above may be joined to another layer (i), (ii) or (iii) as defined above by means of an adhesive, which is not a biodegradable polymer B as defined above.

Preferred adhesives are selected from the group consisting of hot melt adhesives, dispersion adhesives (in particular water based dispersion adhesives), solvent-based adhesives, reactive adhesives, radiation-hardening adhesives, pressure-hardening adhesives, heat-hardening adhesives, water-hardening adhesives, acrylate-based adhesives, epoxy-based adhesives, pressure-sensitive adhesives, natural adhesives, synthetic adhesives, silicon-based adhesives, silane based adhesives. Preferred are biodegradable, e.g. compostable adhesives. Most preferred are compostable water-based dispersion adhesives and compostable hot melts, especially compostable hot melts having a glass transition temperature below the temperature range of usual application of the biodegradable multilayer composite to avoid brittleness and a melting temperature above the temperature range of usual application of the biodegradable multilayer composite.

A specifically preferred adhesive is selected from the class of graft copolymers of biodegradable polyesters as defined above, where maleic anhydride side chains are grafted onto the polyester main chain. The polyesters are preferably selected from the class of aromatic aliphatic polyesters as defined above, e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF). Even more preferred is polybutylene adipate-co-terephthalate-graft-maleic anhydride (PBAT-g-MA), where maleic anhydride side chains are grafted onto a PBAT main chain (BTR-8002P from Mitsubishi Chemicals).

A layer comprising an adhesive which is not a biodegradable polymer B as defined above is also referred to as a tie layer. A tie layer may have a thickness in the range of from 1 µm to 50 µm.

A preferred biodegradable multilayer composite according to the invention has an oxygen transmission rate lower than 100 mL m⁻² day⁻¹ at 23 °C and 50% relative humidity. The oxygen transmission rate is determined according to an established standard, e.g. ASTM D 3985, ASTM F 2622, ASTM F 1307, ASTM F 1927, ISO CD 15105-2, DIN 53380-3, ISO 15105-1, ISO 2556 or ASTM D 1434. Selection of the appropriate standard belongs to the common general knowledge of the skilled person.

A preferred biodegradable multilayer composite according to the invention has a water vapor transmission rate lower than 500 g m⁻² day⁻¹ at 23 °C and 85% relative humidity. The water vapor transmission rate is determined according to an established standard, e.g. ISO 15106-2, ASTM F 1249, EN ISO 12572, EN 1931, ASTM E 96, DIN 52615 or DIN 53122. Selection of the appropriate standard belongs to the common general knowledge of the skilled person.

A preferred biodegradable multilayer composite according to the invention exhibits compostability according to EN 13432.

Most preferably, a biodegradable multilayer composite according to the invention has a water vapor transmission rate lower than 500 g µm m⁻² day⁻¹ at 23 °C and 85 % relative humidity, an oxygen transmission rate lower than 100 mL m⁻² day⁻¹ at 23 °C and 50 % relative humidity, and exhibits compostability according to EN 13432.

A process for preparing a biodegradable multilayer composite according to the invention may comprise known techniques usually applied in the field of packaging, for instance heat-pressing, injection molding, especially co-injection molding, extrusion, especially coextrusion, cast film extrusion, blown film extrusion, lamination, bonding by means of an adhesive, and gas phase deposition.

A biodegradable multilayer composite according to the invention may be processed by means of known techniques usually applied in the field of packaging, for instance thermoforming, sealing, folding, embossing, imprinting, printing, lamination, in-mold labelling, bonding by means of an adhesive, coating (e.g. spray coating, gravure or reverse gravure coating, roller coating, flexo coating, air knife coating, dip coating, slot die coating, curtain coating, screen coating, extrusion coating) and corona treatment.

A further aspect of the present invention is the use of a biodegradable multilayer composite as defined above for packaging. Such packaging may be a flexible packaging, e.g. a stand up pouch, a flow packaging, a flow wrapping, a bag like a pillow bag, a flat bag, or a sachet. Alternatively, such packaging may be a rigid item produced from a flat precursor, e.g. a tray, a cup, or a box. Selection of a suitable multilayer composite for obtaining the desired type of packaging is within the common general knowledge of the skilled person.

For example, such packaging can be food packaging, personal care packaging, packaging for medical articles and agricultural packaging. In particular, the application of the multilayer composite in food packaging is preferred.

A further aspect of the present invention is the use of an aliphatic polycondensate A as defined above for preparing a biodegradable multilayer composite as defined above.

In the following, certain specific embodiments and examples of the invention are described which however are not limiting. In said specific embodiments, layer (i) comprises or consists of an aliphatic polycondensate A comprising or consisting of
- linear structural units (a) having 18 carbon atoms,
- structural units formed from one or more aliphatic α,ω-dicarboxylic acids having 14 to 30 carbon atoms, except for linear aliphatic α,ω-dicarboxylic acid having 18 carbon atoms (n-octadecanedioic acid)
   wherein based on the total amount of structural units formed from aliphatic α,ω-dicarboxylic acids having 14 to 30 carbon atoms, 70 wt% or more are structural units (a) having 18 carbon atoms, and 30 wt% or less are structural units formed from one or more aliphatic α,ω-dicarboxylic acids having 14 to 17 or 19 to 30 carbon atoms,
   and
- structural units (b) having 2 carbon atoms.

The weight fraction of said aliphatic polycondensate A is 20 to 100 wt%, more preferably 50 to 100 wt%, and even more preferably 70 to 100 wt%, based on the weight of layer (i). Typically, layer (i) as defined above is a standalone layer and may have a thickness of 1 µm to 100 µm, more preferably 5 µm to 50 µm.

A first group (I) of preferred embodiments are two-layer composites consisting of a layer (i) comprising an aliphatic polycondensate A as defined above, and a layer (ii) adjacent to a surface of layer (i).

For instance, layer (ii) of the two-layer composite (I) comprises or consists of an inorganic material, e.g. aluminum or oxides of aluminum and/or silicon, deposited on the surface of layer (i) by vapor phase deposition and has a thickness of 5 nm to 300 nm, more preferably 10 nm to 150 nm.

For instance, layer (ii) of the two-layer composite (I) comprises or consists of a biodegradable polymer B which is a polyester as defined above, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid (PLA), polycaprolactone (PCL) and copolymers and blends thereof, acting as a mechanical support substrate for layer (i).

For instance, layer (ii) of the two-layer composite (I) comprises or consists of polyvinyl alcohol, acting as an oxygen barrier.

For instance, layer (ii) of the two-layer composite (I) comprises or consists of polyglycolic acid, acting as an oxygen barrier.

For instance, layer (ii) of the two-layer composite (I) comprises or consists of a protein, e.g. casein, protein based materials (as defined above, in particular thermoplastic proteins, e.g. thermoplastic casein) acting as an oxygen barrier.

For instance, layer (ii) of the two-layer composite (I) comprises or consists of starch, starch based materials (as defined above, in particular thermoplastic starch), chitin and/or chitosan, acting as an oxygen barrier.

A two-layer composite (I) as defined above may be a precursor for obtaining a biodegradable multilayer composite according to the invention.

A second group (II) of preferred embodiments are three-layer composites consisting of a layer comprising an aliphatic polycondensate A as defined above and a wax, embedded between two layers (ii) comprising or consisting of a biodegradable polymer B which is a polyester as defined above, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid (PLA), polycaprolactone (PCL) and copolymers and blends thereof. Said two layers (ii) may have the same or a different composition.

In three-layer composite (II), the external layers (ii) may serve as barriers against migration of wax from layer (i) to the surface of the composite and into a packaged good.

A third group (III) of preferred embodiments are three-layer composites consisting of a layer (ii) comprising or consisting of one or more of polyvinyl alcohol, protein, protein-based materials (as defined above, in particular thermoplastic proteins), starch, starch based materials (as defined above, in particular thermoplastic starch), chitin, chitosan, and polyglycolic acid, embedded between two layers (i) each comprising or consisting of an aliphatic polycondensate A as defined above. Said two layers (i) may have the same or a different composition.

In three-layer composite (III), the external layers (i) may serve to protect the inner layer (ii) which comprises or consists of a material having a lower hydrolytic stability than the external layers (i) against humidity. Preferably, the external layers (i) also comprises a wax as described above.

A fourth group (IV) of preferred embodiments are three-layer composites consisting of a layer (i) comprising an aliphatic polycondensate A as defined above, a layer (ii), and a tie layer joining layer (i) to layer (ii). The tie layer comprises an adhesive which is not a biodegradable polymer B as defined above. Layer (ii) comprises polyvinyl alcohol, or a biodegradable B which is a polyester as defined above, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid and copolymers and blends thereof. In particular, the adhesive is selected from the class of graft copolymers of said biodegradable polyesters, where maleic anhydride side chains are grafted onto the polyester main chain. Preferably, the graft copolymer is polybutylene adipate-co-terephthalate-graft-maleic anhydride (PBAT-g-MA), where maleic anhydride side chains are grafted onto a PBAT main chain (e.g. BTR-8002P from Mitsubishi Chemicals).

A fifth group (V) of preferred embodiments are three-layer composites consisting of a layer (i) comprising or consisting of an aliphatic polycondensate A as defined above, a layer (ii) as defined above and a layer (iii) comprising or consisting of a nonwoven made of fibers, in any order of layers (i), (ii) and (iii). Preferably, layer (iii) is in the form of paper, paperboard or cardboard and has a thickness in the range of 10 µm to 500 µm, more preferably 30 µm to 300 µm. Preferably, layer (ii) comprises or consists of polyvinyl alcohol, or a biodegradable polymer B which is a polyester as defined above, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid and copolymers and blends thereof.

A sixth group (VI) of preferred embodiments are three-layer composites consisting of a layer (i) comprising or consisting of an aliphatic polycondensate A as defined above, a first layer (ii) comprising or consisting of an inorganic material, e.g. aluminum or oxides of aluminum and/or silicon, deposited on the surface of layer (i) by vapor phase deposition and having a thickness of 5 nm to 300 nm, more preferably 10 nm to 150 nm, and a second layer (ii) covering the surface of the inorganic material facing away from layer (i), wherein said second layer (ii) comprises or consists of a lacquer, especially shellac, or a coating, e.g. an extrusion coating, e.g. with a hot melt, said coating comprising or consisting of aromatic-aliphatic polyesters as defined above, e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF), polybutylene succinate (PBS), polylactic acid and copolymers and blends thereof.

A biodegradable multilayer composite according to the invention may comprise one or more of two-layer composites (I) and three layer composites (II), (III), (IV), (V) or (VI).

For instance, a two-layer composite (I) or a three layer composite (II), (III), (IV), (V) or (VI) is embedded between two further layers (ii) each comprising a biodegradable polymer B, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid and copolymers and blends thereof. Optionally, one or both of said layers (ii) are joined to said two-layer composite (I) or to said three-layer composite (II), (III), (IV) (V) or (VI) by means of a tie layer comprising an adhesive. In particular, the adhesive is selected from the class of graft copolymers of said biodegradable polyesters, where maleic anhydride side chains are grafted onto the polyester main chain. Preferably, the graft copolymer is polybutylene adipate-co-terephthalate-graft-maleic anhydride (PBAT-g-MA), where maleic anhydride side chains are grafted onto a PBAT main chain (BTR-8002P from Mitsubishi Chemicals).

For instance, a two-layer composite (I) consisting of a layer (i) comprising or consisting of aliphatic polycondensate A as defined above and a layer (ii) comprising or consisting of polyvinyl alcohol, or a three layer composite (III) consisting of a layer (ii) comprising or consisting of one or more of polyvinyl alcohol, protein (in particular thermoplastic proteins), starch (in particular thermoplastic starch), chitin, chitosan, and polyglycolic acid, embedded between two layers (i) each comprising or consisting of an aliphatic polycondensate A as defined above, may be embedded between two further layers (ii) each comprising a biodegradable polymer B which is a polyester as defined above, preferably selected from the group consisting of aromatic-aliphatic polyesters as defined above (e.g. polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF)), polybutylene succinate (PBS), polylactic acid and copolymers and blends thereof. Optionally, one or both of said layers (ii) are joined to said two-layer composite (I) or to said three-layer composite (III) by means of a tie layer comprising an adhesive. In particular, the adhesive is selected from the class of graft copolymers of said biodegradable polyesters, where maleic anhydride side chains are grafted onto the polyester main chain. Preferably, the graft copolymer is polybutylene adipate-co-terephthalate-graft-maleic anhydride (PBAT-g-MA), where maleic anhydride side chains are grafted onto a PBAT main chain (BTR-8002P from Mitsubishi Chemicals).

In any of the above-described specific embodiments and examples, any of layers (i), (ii) and if present (iii) may contain one or more additives selected from the list given above. Selection of suitable additives in suitable amounts belongs to the common general knowledge of the skilled person.

## Claims

1. Biodegradable multilayer composite, comprising
(i) one or more layers comprising one or more polycondensates A comprising
(a) structural units formed from one or more aliphatic α,ω-dicarboxylic acids having 18 to 30 carbon atoms
and
(b) structural units formed from one or more aliphatic α,ω-diols having 2 to 8 carbon atoms,
wherein polycondensate A does not contain structural units formed from any aromatic dicarboxylic acid,
wherein layer (i) does not comprise natural wax,
(ii) one or more layers having a composition different from layer (i)
said layers (ii) comprising independent from each other one or more materials selected from the group consisting of
- biodegradable polymers B different from polycondensates A, wherein said biodegradable polymers B are selected from the group consisting of polyesters, polyamides, polycarbonates, polyurethanes, polyethers, polyols, shellac, chitosan, chitin, cellulose hydrates, callose, starch, starch based materials, proteins, and protein based materials, and copolymers thereof;
and
- inorganic materials selected from the group consisting of metals, metalloids, oxides of metals, oxides of metalloids, nitrides of metals and nitrides of metalloids.

2. Biodegradable multilayer composite according to claim 1, wherein said polycondensate A comprises
- structural units (a) formed from a first aliphatic α,ω-dicarboxylic acid having 18 to 30 carbon atoms,
- and further comprises structural units formed from one or more other aliphatic α,ω-dicarboxylic acids having 14 to 30 carbon atoms
wherein based on the total amount of structural units formed from aliphatic α,ω-dicarboxylic acids having 14 to 30 carbon atoms in said polycondensate A
- 70 wt% or more are structural units (a) formed from said first aliphatic α,ω-dicarboxylic acid having 18 to 30 carbon atoms,
- and 30 wt% or less are structural units formed from said one or more other aliphatic α,ω-dicarboxylic acids having 14 to 30 carbon atoms.

3. Biodegradable multilayer composite according to any preceding claim, wherein in said polycondensate A
the structural units (a) are formed from one or more aliphatic α,ω-dicarboxylic acids having 18 to 30 carbon atoms which are saturated and/or are linear and/or have an even number of carbon atoms.

4. Biodegradable multilayer composite according to any preceding claim, wherein in said polycondensate A
the structural units (a) have 18 to 28 carbon atoms, preferably 18 to 26 carbon atoms and/or
the structural units (b) have 2 to 6 carbon atoms, preferably 2 to 4 carbon atoms.

5. Biodegradable multilayer composite according to any preceding claim, wherein said polycondensate A further comprises one or more of
(c) structural units formed from one or more trifunctional alcohols,
wherein the weight fraction of structural units (c) is 2 wt% or less, based on the total weight of the structural units (a) and (b)
and/or
(d) structural units formed from one or more difunctional or oligofunctional species selected from the group consisting of isocyanates, isocyanurates, peroxides, epoxides, oxazolines, oxazines, caprolactams, and carbodiimides,
wherein the weight fraction of structural units (d) is 4 wt% or less, based on the total weight of the structural units (a) and (b).

6. Biodegradable multilayer composite according to any preceding claim, wherein said polycondensate A comprises
- linear structural units (a) having 18 carbon atoms,
- structural units formed from one or more aliphatic α,ω-dicarboxylic acids having 14 to 17 or 19 to 30 carbon atoms,
wherein based on the total amount of structural units formed from aliphatic α,ω-dicarboxylic acids having 14 to 30 carbon atoms, 70 wt% or more are linear structural units (a) having 18 carbon atoms, and 30 wt% or less are structural units formed from one or more aliphatic α,ω-dicarboxylic acids having 14 to 17 or 19 to 30 carbon atoms,
and
- structural units (b) having 2, 3 or 4 carbon atoms, preferably 2 carbon atoms
wherein said polycondensate A optionally further comprises
- structural units (c) formed from one or more trifunctional alcohols, wherein the weight fraction of structural units (c) is 2 wt% or less, based on the total weight of the structural units (a) and (b),
and/or
- structural units (d) formed from one or more isocyanates having two or more isocyanate groups, wherein the weight fraction of structural units (d) is 4 wt% or less, based on the total weight of the structural units (a) and (b).

7. Biodegradable multilayer composite according to any preceding claim, wherein the total weight fraction of the said polycondensates A is
20 wt% to 100 wt%, more preferably 50 wt% to 100 wt%, and even more preferably 70 wt% to 100 wt%, based on the weight of layer (i).

8. Biodegradable multilayer composite according to any preceding claim, wherein said biodegradable polymer B is selected from the group consisting of
- polycondensates comprising structural units formed from one or more aliphatic dicarboxylic acids having 4 to 13 carbon atoms and structural units formed from one or more diols having 2 to 8 carbon atoms
- polycondensates comprising structural units formed from one or more aliphatic w-hydroxy-carboxylic acids having 10 to 26 carbon atoms
- polycondensates comprising structural units formed from one or more *β*-hydroxy-carboxylic acids having 4 to 14 carbon atoms
- polycondensates comprising structural units formed from one or more hydroxy-carboxylic acids having a hydroxy group that is not in *β*-position and having 2 to 9 carbon atoms
- polycondensates comprising or consisting of structural units formed from one or more aliphatic dicarboxylic acids having 4 to 18 carbon atoms, structural units formed from one or more aromatic dicarboxylic acids, and structural units formed from one or more diols having 2 to 6 carbon atoms,
- polyvinyl alcohol,
- starch and thermoplastic starch,
- proteins and thermoplastic proteins.

9. Biodegradable multilayer composite according to any preceding claim, wherein biodegradable polymer B is selected from the group consisting of polybutylene succinate-co-terephthalate (PBST), polybutylene adipate-co-terephthalate (PBAT), polybutylene sebacate-co-terephthalate (PBSeT), polybutylene azelate-co-terephthalate (PBAzT), polybutylene sebacate-co-furanoate (PBSeF), polybutylene azelate-co-furanoate (PBAzF), polybutylene succinate (PBS), polylactic acid and copolymers and blends thereof.

10. Biodegradable multilayer composite according to any preceding claim comprising a layer (ii) comprising one or more inorganic materials selected from the group consisting of metals, metalloids, oxides of metals, oxides of metalloids, nitrides of metals and nitrides of metalloids, wherein said layer (ii) has a thickness of 5 nm to 300 nm, preferably 10 nm to 150 nm.

11. Biodegradable multilayer composite according to any preceding claim, wherein the one or more layers (ii) do not comprise a polycondensate (A) as defined in claims 1 to 6.

12. Biodegradable multilayer composite according to any preceding claim, further comprising
(iii) one or more layers comprising a nonwoven comprising natural fibers and/or chemical fibers of natural polymers.

13. Biodegradable multilayer composite according to any preceding claim, wherein said biodegradable multilayer composite has
- a water vapor transmission rate lower than 500 g m⁻² day⁻¹ at 23 °C and 85 % relative humidity
and/or
- an oxygen transmission rate lower than 100 mL m⁻² day⁻¹ at 23 °C and 50 % relative humidity
and/or
- compostability according to EN 13432.

14. Use of a biodegradable multilayer composite according to any preceding claim for food packaging.

15. Use of a polycondensate A as defined in any of claims 1 to 6 for preparing a biodegradable multilayer composite as defined in any of claims 1 to 13.

## Patentansprüche

1. Biologisch abbaubarer Mehrschichtverbund, umfassend
(i) eine oder mehr Schichten, umfassend ein oder mehr Polykondensate A, umfassend
(a) Struktureinheiten, gebildet aus einer oder mehr aliphatischen α,ω-Dicarbonsäuren mit 18 bis 30 Kohlenstoffatomen
und
(b) Struktureinheiten, gebildet aus einem oder mehr aliphatischen α,ω-Diolen mit 2 bis 8 Kohlenstoffatomen,
wobei Polykondensat A keine Struktureinheiten enthält, die aus einer aromatischen Dicarbonsäure gebildet sind,
wobei Schicht (i) kein natürliches Wachs umfasst,
(ii) eine oder mehr Schichten mit einer von Schicht (i) verschiedenen Zusammensetzung,
wobei die Schichten (ii) unabhängig voneinander ein oder mehr Materialien umfassen, ausgewählt aus der Gruppe bestehend aus
- biologisch abbaubaren Polymeren B, verschieden von Polykondensaten A, wobei die biologisch abbaubaren Polymere B ausgewählt sind aus der Gruppe bestehend aus Polyestern, Polyamiden, Polycarbonaten, Polyurethanen, Polyethern, Polyolen, Schellack, Chitosan, Chitin, Zellulosehydraten, Callose, Stärke, stärkebasierten Materialien, Proteinen und proteinbasierten Materialien, und Copolymeren davon;
und
- anorganischen Materialien, ausgewählt aus der Gruppe bestehend aus Metallen, Metalloiden, Metalloxiden, Metalloidoxiden, Metallnitriden und Metalloidnitriden.

2. Biologisch abbaubarer Mehrschichtverbund nach Anspruch 1, wobei das Polykondensat A umfasst
- Struktureinheiten (a), gebildet aus einer ersten aliphatischen α,ω-Dicarbonsäure mit 18 bis 30 Kohlenstoffatomen,
- und weiterhin Struktureinheiten umfasst, gebildet aus einer oder mehr anderen aliphatischen α,ω-Dicarbonsäuren mit 14 bis 30 Kohlenstoffatomen,
wobei, bezogen auf die Gesamtmenge der Struktureinheiten, gebildet aus aliphatischen α,ω-Dicarbonsäuren mit 14 bis 30 Kohlenstoffatomen im genannten Polykondensat A,
- 70 Gew.-% oder mehr Struktureinheiten (a) sind, gebildet aus der genannten ersten aliphatischen α,ω-Dicarbonsäure mit 18 bis 30 Kohlenstoffatomen,
- und 30 Gew.-% oder weniger Struktureinheiten sind, gebildet aus der genannten einen oder mehr anderen aliphatischen α,ω-Dicarbonsäuren mit 14 bis 30 Kohlenstoffatomen.

3. Biologisch abbaubarer Mehrschichtverbund nach einem der vorhergehenden Ansprüche, wobei im genannten Polykondensat A
die Struktureinheiten (a) gebildet sind aus einer oder mehr aliphatischen α,ω-Dicarbonsäuren mit 18 bis 30 Kohlenstoffatomen, die gesättigt und/oder linear sind und/oder eine gerade Anzahl von Kohlenstoffatomen aufweisen.

4. Biologisch abbaubarer Mehrschichtverbund nach einem der vorhergehenden Ansprüche, wobei im genannten Polykondensat A
die Struktureinheiten (a) 18 bis 28 Kohlenstoffatome, bevorzugt 18 bis 26 Kohlenstoffatome aufweisen
und/oder
die Struktureinheiten (b) 2 bis 6 Kohlenstoffatome, bevorzugt 2 bis 4 Kohlenstoffatome aufweisen.

5. Biologisch abbaubarer Mehrschichtverbund nach einem der vorhergehenden Ansprüche, wobei das genannte Polykondensat A zudem ein oder mehr umfasst aus
(c) Struktureinheiten, gebildet aus einem oder mehr trifunktionellen Alkoholen,
wobei der Gewichtsanteil der Struktureinheiten (c) 2 Gew.-% oder weniger beträgt, bezogen auf das Gesamtgewicht der Struktureinheiten (a) und (b),
und/oder
(d) Struktureinheiten, gebildet aus einer oder mehr difunktionellen oder oligofunktionellen Spezies, ausgewählt aus der Gruppe bestehend aus Isocyanaten, Isocyanuraten, Peroxiden, Epoxiden, Oxazolinen, Oxazinen, Caprolactamen und Carbodiimiden,
wobei der Gewichtsanteil der Struktureinheiten (d) 4 Gew.-% oder weniger beträgt, bezogen auf das Gesamtgewicht der Struktureinheiten (a) und (b).

6. Biologisch abbaubarer Mehrschichtverbund nach einem der vorhergehenden Ansprüche, wobei das genannte Polykondensat A umfasst
- lineare Struktureinheiten (a) mit 18 Kohlenstoffatomen,
- Struktureinheiten, gebildet aus einer oder mehr aliphatischen α,ω-Dicarbonsäuren mit 14 bis 17 oder 19 bis 30 Kohlenstoffatomen,
wobei, bezogen auf die Gesamtmenge der Struktureinheiten, gebildet aus aliphatischen α,ω-Dicarbonsäuren mit 14 bis 30 Kohlenstoffatomen, 70 Gew.-% oder mehr lineare Struktureinheiten (a) mit 18 Kohlenstoffatomen sind, und 30 Gew.-% oder weniger Struktureinheiten sind, gebildet aus einer oder mehr aliphatischen α,ω-Dicarbonsäuren mit 14 bis 17 oder 19 bis 30 Kohlenstoffatomen,
und
- Struktureinheiten (b) mit 2, 3 oder 4 Kohlenstoffatomen, bevorzugt 2 Kohlenstoffatomen,
wobei das genannte Polykondensat A optional zudem umfasst
- Struktureinheiten (c), gebildet aus einem oder mehr trifunktionellen Alkoholen, wobei der Gewichtsanteil der Struktureinheiten (c) 2 Gew.-% oder weniger beträgt, bezogen auf das Gesamtgewicht der Struktureinheiten (a) und (b),
und/oder
- Struktureinheiten (d), gebildet aus einem oder mehr Isocyanaten mit zwei oder mehr Isocyanatgruppen, wobei der Gewichtsanteil der Struktureinheiten (d) 4 Gew.-% oder weniger beträgt, bezogen auf das Gesamtgewicht der Struktureinheiten (a) und (b).

7. Biologisch abbaubarer Mehrschichtverbund nach einem der vorhergehenden Ansprüche, wobei der Gesamtgewichtsanteil der genannten Polykondensate A
20 Gew.-% bis 100 Gew.-%, stärker bevorzugt 50 Gew.-% bis 100 Gew.-%, und noch stärker bevorzugt 70 Gew.-% bis 100 Gew.-% beträgt, bezogen auf das Gewicht der Schicht (i).

8. Biologisch abbaubarer Mehrschichtverbund nach einem der vorhergehenden Ansprüche, wobei das genannte biologisch abbaubare Polymer B ausgewählt ist aus der Gruppe bestehend aus
- Polykondensaten, umfassend Struktureinheiten, gebildet aus einer oder mehr aliphatischen Dicarbonsäuren mit 4 bis 13 Kohlenstoffatomen und Struktureinheiten, gebildet aus einem oder mehr Diolen mit 2 bis 8 Kohlenstoffatomen,
- Polykondensaten, umfassend Struktureinheiten, gebildet aus einer oder mehr aliphatischen ω-Hydroxycarbonsäuren mit 10 bis 26 Kohlenstoffatomen,
- Polykondensaten, umfassend Struktureinheiten, gebildet aus einer oder mehr β-Hydroxycarbonsäuren mit 4 bis 14 Kohlenstoffatomen,
- Polykondensaten, umfassend Struktureinheiten, gebildet aus einer oder mehr Hydroxycarbonsäuren mit einer nicht in β-Position befindlichen Hydroxygruppe und mit 2 bis 9 Kohlenstoffatomen,
- Polykondensaten, umfassend oder bestehend aus Struktureinheiten, gebildet aus einer oder mehr aliphatischen Dicarbonsäuren mit 4 bis 18 Kohlenstoffatomen, Struktureinheiten, gebildet aus einer oder mehr aromatischen Dicarbonsäuren, und Struktureinheiten, gebildet aus einem oder mehr Diolen mit 2 bis 6 Kohlenstoffatomen,
- Polyvinylalkohol,
- Stärke und thermoplastischer Stärke,
- Proteinen und thermoplastischen Proteinen.

9. Biologisch abbaubarer Mehrschichtverbund nach einem der vorhergehenden Ansprüche, wobei das biologisch abbaubare Polymer B ausgewählt ist aus der Gruppe bestehend aus Polybutylensuccinat-co-terephthalat (PBST), Polybutylenadipat-co-terephthalat (PBAT), Polybutylensebacat-co-terephthalat (PBSeT), Polybutylenazelat-co-terephthalat (PBAzT), Polybutylensebacat-co-furanoat (PBSeF), Polybutylenazelat-co-furanoat (PBAzF), Polybutylensuccinat (PBS), Polymilchsäure und Copolymeren und Mischungen davon.

10. Biologisch abbaubarer Mehrschichtverbund nach einem der vorhergehenden Ansprüche, umfassend eine Schicht (ii), umfassend ein oder mehr anorganische Materialien, ausgewählt aus der Gruppe bestehend aus Metallen, Metalloiden, Metalloxiden, Metalloidoxiden, Metallnitriden und Metalloidnitriden, wobei die genannte Schicht (ii) eine Dicke von 5 nm bis 300 nm, bevorzugt 10 nm bis 150 nm, aufweist.

11. Biologisch abbaubarer Mehrschichtverbund nach einem der vorhergehenden Ansprüche, wobei die eine oder mehr Schichten (ii) kein Polykondensat (A) wie in den Ansprüchen 1 bis 6 definiert umfassen.

12. Biologisch abbaubarer Mehrschichtverbund nach einem der vorhergehenden Ansprüche, weiterhin umfassend
(iii) eine oder mehr Schichten, umfassend einen Vliesstoff, umfassend Naturfasern und/oder Chemiefasern aus natürlichen Polymeren.

13. Biologisch abbaubarer Mehrschichtverbund nach einem der vorhergehenden Ansprüche, wobei der genannte biologisch abbaubare Mehrschichtverbund aufweist
- eine Wasserdampfdurchlässigkeit von weniger als 500 g m⁻² Tag⁻¹ bei 23 °C und 85 % relativer Luftfeuchtigkeit
und/oder
- eine Sauerstoffdurchlässigkeit von weniger als 100 mL m⁻² Tag⁻¹ bei 23 °C und 50 % relativer Luftfeuchtigkeit
und/oder
- Kompostierbarkeit gemäß EN 13432.

14. Verwendung eines biologisch abbaubaren Mehrschichtverbunds nach einem der vorhergehenden Ansprüche zur Lebensmittelverpackung.

15. Verwendung eines Polykondensats A wie in einem der Ansprüche 1 bis 6 definiert zur Herstellung eines biologisch abbaubaren Mehrschichtverbunds wie in einem der Ansprüche 1 bis 13 definiert.

## Revendications

1. Composite multicouche biodégradable, comprenant
(i) une ou plusieurs couches comprenant un ou plusieurs polycondensats A comprenant
(a) des motifs structurels formés à partir d'un ou plusieurs acides α,ω-dicarboxyliques aliphatiques présentant 18 à 30 atomes de carbone
et
(b) des motifs structurels formés à partir d'un ou plusieurs α,ω-diols aliphatiques présentant 2 à 8 atomes de carbone,
dans lequel le polycondensat A ne contient pas de motifs structurels formés à partir d'un quelconque acide dicarboxylique aromatique,
dans lequel la couche (i) ne comprend pas de cire naturelle,
(ii) une ou plusieurs couches présentant une composition différente de la couche (i)
lesdites couches (ii) comprenant indépendamment les unes des autres un ou plusieurs matériaux sélectionnés dans le groupe consistant en
- des polymères biodégradables B différents des polycondensats A, dans lequel lesdits polymères biodégradables B sont sélectionnés dans le groupe consistant en polyesters, polyamides, polycarbonates, polyuréthanes, polyéthers, polyols, gomme-laque, chitosane, chitine, hydrates de cellulose, callose, amidon, matériaux à base d'amidon, protéines et matériaux à base de protéines, et leurs copolymères ;
et
- des matériaux inorganiques sélectionnés dans le groupe constitué des métaux, des métalloïdes, des oxydes de métaux, des oxydes de métalloïdes, des nitrures de métaux et des nitrures de métalloïdes.

2. Composite multicouche biodégradable selon la revendication 1, dans lequel ledit polycondensat A comprend
- des motifs structurels (a) formés à partir d'un premier acide α,ω-dicarboxylique aliphatique présentant 18 à 30 atomes de carbone,
- et comprend en outre des motifs structurels formés à partir d'un ou plusieurs autres acides α,ω-dicarboxyliques aliphatiques présentant 14 à 30 atomes de carbone
dans lequel sur la base de la quantité totale de motifs structurels formés à partir d'acides α,ω-dicarboxyliques aliphatiques présentant 14 à 30 atomes de carbone dans ledit polycondensat A
- 70 % en poids ou plus sont des motifs structurels (a) formés à partir dudit premier acide α,ω-dicarboxylique aliphatique présentant 18 à 30 atomes de carbone,
- et 30 % en poids ou moins sont des motifs structurels formés à partir desdits un ou plusieurs autres acides α,ω-dicarboxyliques aliphatiques présentant 14 à 30 atomes de carbone.

3. Composite multicouche biodégradable selon une quelconque revendication précédente, dans lequel dans ledit polycondensat A
les motifs structurels (a) sont formés à partir d'un ou plusieurs acides α,ω-dicarboxyliques aliphatiques présentant 18 à 30 atomes de carbone qui sont saturés et/ou sont linéaires et/ou ont un nombre pair d'atomes de carbone.

4. Composite multicouche biodégradable selon une quelconque revendication précédentes, dans lequel dans ledit polycondensat A
les motifs structurels (a) ont 18 à 28 atomes de carbone, de préférence 18 à 26 atomes de carbone
et/ou
les motifs structurels (b) ont 2 à 6 atomes de carbone, de préférence 2 à 4 atomes de carbone.

5. Composite multicouche biodégradable selon une quelconque revendication précédente, dans lequel ledit polycondensat A comprend en outre un ou plusieurs parmi
(c) des motifs structurels formés à partir d'un ou plusieurs alcools trifonctionnels,
dans lequel la fraction massique des motifs structurels (c) est de 2 % en poids ou moins, sur la base du poids total des motifs structurels (a) et (b)
et/ou
(d) des motifs structurels formés à partir d'une ou plusieurs espèces difonctionnelles ou oligofonctionnelles sélectionnées dans le groupe consistant en isocyanates, isocyanurates, peroxydes, époxydes, oxazolines, oxazines, caprolactames et carbodiimides,
dans lequel la fraction massique de motifs structurels (d) est de 4 % en poids ou moins, sur la base du poids total des motifs structurels (a) et (b).

6. Composite multicouche biodégradable selon une quelconque revendication précédente, dans lequel ledit polycondensat A comprend
- des motifs structurels (a) linéaires présentant 18 atomes de carbone,
- des motifs structurels formés à partir d'un ou plusieurs acides α,ω-dicarboxyliques aliphatiques présentant 14 à 17 ou 19 à 30 atomes de carbone,
dans lequel, sur la base de la quantité totale de motifs structurels formés partir d'acides α,ω-dicarboxyliques aliphatiques présentant 14 à 30 atomes de carbone, 70 % en poids ou plus sont des motifs structurels (a) linéaires présentant 18 atomes de carbone, et 30 % en poids ou moins sont des motifs structurels formés à partir d'un ou plusieurs acides α,ω-dicarboxyliques aliphatiques présentant 14 à 17 ou 19 à 30 atomes de carbone,
et
- des motifs structurels (b) présentant 2, 3 ou 4 atomes de carbone, de préférence 2 atomes de carbone
dans lequel ledit polycondensat A comprend en outre facultativement
- des motifs structurels (c) formés à partir d'un ou plusieurs alcools trifonctionnels, dans lequel la fraction massique des motifs structurels (c) est de 2 % en poids ou moins, sur la base du poids total des motifs structurels (a) et (b),
et/ou
- des motifs structurels (d) formés à partir d'un ou plusieurs isocyanates résentant deux groupes isocyanates ou plus, dans lequel la fraction massique de motifs structurels (d) est de 4 % en poids ou moins, sur la base du poids total des motifs structurels (a) et (b).

7. Composite multicouche biodégradable selon une quelconque revendication précédente, dans lequel la fraction massique totale dudit polycondensat A est
20 % en poids à 100 % en poids, plus préférentiellement 50 % en poids à 100 % en poids, et encore plus préférentiellement 70 % en poids à 100 % en poids, sur la base du poids de la couche (i).

8. Composite multicouche biodégradable selon une quelconque revendication précédente, dans lequel ledit polymère biodégradable B est sélectionné dans le groupe consistant en
- des polycondensats comprenant des motifs structurels formés à partir 'un ou plusieurs acides dicarboxyliques aliphatiques présentant 4 à 13 atomes de carbone et des motifs structurels formés à partir d'un ou plusieurs diols présentant 2 à 8 atomes de carbone
- des polycondensats comprenant des motifs structurels formés à partir d'un ou plusieurs acides ω-hydroxycarboxyliques aliphatiques présentant 10 à 26 atomes de carbone
- des polycondensats comprenant des motifs structurels formés à partir d'un ou plusieurs acides *β-*hydroxycarboxyliques présentant 4 à 14 atomes de carbone
- des polycondensats comprenant des motifs structurels formés à partir d'un ou plusieurs acides hydroxycarboxyliques présentant un groupe hydroxy qui n'est pas en position *β* et présentant 2 à 9 atomes de carbone
- des polycondensats comprenant ou consistant en des motifs structurels formés à partir d'un ou plusieurs acides dicarboxyliques aliphatiques présentant 4 à 18 atomes de carbone, des motifs structurels formés à partir d'un ou plusieurs acides dicarboxyliques aromatiques, et des motifs structurels formés à partir d'un ou plusieurs diols présentant 2 à 6 atomes de carbone,
- de l'alcool polyvinylique,
- de l'amidon et de l'amidon thermoplastique,
- des protéines et des protéines thermoplastiques.

9. Composite multicouche biodégradable selon une quelconque revendication précédente, dans lequel le polymère biodégradable B est sélectionné dans le groupe consistant en poly(succinate-co-téréphtalate de butylène) (PBST), poly(adipate-co-téréphtalate de butylène) (PBAT), poly(sébacate-co-téréphtalate de butylène) (PBSeT), poly(azélate-co-téréphtalate de butylène) (PBAzT), poly(sébacate-co-furanoate de butylène) (PBSeF), poly(azélate-co-furanoate de butylène) (PBAzF), poly(succinate de butylène) (PBS), l'acide polylactique, leurs copolymères et leurs mélanges.

10. Composite multicouche biodégradable selon une quelconque revendication précédente comprenant une couche (ii) comprenant un ou plusieurs matériaux inorganiques sélectionnés dans le groupe consistant en métaux, métalloïdes, oxydes de métaux, oxydes de métalloïdes, nitrures de métaux et nitrures de métalloïdes, dans lequel ladite couche (ii) présente une épaisseur de 5 nm à 300 nm, de préférence de 10 nm à 150 nm.

11. Composite multicouche biodégradable selon une quelconque revendication précédente, dans lequel les une ou plusieurs couches (ii) ne comprennent pas un polycondensat (A) tel que défini dans les revendications 1 à 6.

12. Composite multicouche biodégradable selon une quelconque revendication précédente, comprenant en outre
(iii) une ou plusieurs couches comprenant un non-tissé comprenant des fibres naturelles et/ou des fibres chimiques de polymères naturels.

13. Composite multicouche biodégradable selon une quelconque revendication précédente, dans lequel ledit composite multicouche biodégradable présente
- un taux de transmission de vapeur d'eau inférieur à 500 g m⁻² jour⁻¹ à 23 °C et 85 % d'humidité relative
et/ou
- un taux de transmission d'oxygène inférieur à 100 ml m⁻² jour⁻¹ à 23 °C et 50 % d'humidité relative
et/ou
- une compostabilité selon la norme EN 13432.

14. Utilisation d'un composite multicouche biodégradable selon une quelconque revendication précédente pour l'emballage alimentaire.

15. Utilisation d'un polycondensat A tel que défini dans l'une quelconque des revendications 1 à 6 pour préparer un composite multicouche biodégradable tel que défini dans l'une quelconque des revendications 1 à 13.
